# EUROPEAN PATENT SPECIFICATION

(11) **EP 2 042 404 B1**
(45) Date of publication and mention of the grant of the patent: **24.11.2010**
(21) Application number: 07018814.9
(22) Date of filing: 25.09.2007
(51) Int. Cl.: B62B 7/14

(54) **Baby stroller with portable cradle**
Kinderwagen mit tragbarer Wiege
Poussette de bébé avec berceau portable

(43) Date of publication of application: 01.04.2009
(73) Proprietor: Chen, Ting-Yu, Situn District Taichung City 407 (TW)
(72) Inventor: Chen, Ting-Yu, Situn District Taichung City 407 (TW)
(74) Representative: Casalonga, Axel

(56) References cited:
- WO-A-2006/031115
- GB-A- 2 418 179
- US-A1- 2005 264 062

## Description

The present invention relates to a baby stroller with a portable cradle which is easily installed to and disengaged from the stroller.

Prior art baby strollers are known from US 2005/0264062 A1, from GB 2 418 179 A and from WO 2006/031115 A2.

A conventional baby stroller and generally includes a frame with a front wheel assembly and a rear wheel assembly, a portable cradle is connected to the frame and can be separated from the frame of the stroller when needed. The connection to the portable cradle and the frame of the stroller is simple but not reliable. The portable cradle is simply directly inserted into tubes of the frame of the stroller so that the portable cradle is not well positioned. Even if the portable cradle is positioned to the frame of the stroller, a complicated mechanism is involved which is difficult to operate. Besides, some baby strollers have a flexible design for the front wheel assembly which can be changed to one-wheel assembly or two-wheel assembly. The high fabrication cost for the conventional front wheel assembly is an existed problem and is not improved.

The present invention intends to provide a baby stroller which includes a pivotal device and support device so as to well position the portable cradle and the portable cradle can also be adjusted its inclination. The front wheel assembly is also be improved and can be easily changed by one action.

The present invention is defined in claim 1 and relates to a baby stroller which comprises a frame and a portable cradle is removably connected to the frame. The portable cradle includes a cradle frame and two pivotal devices are connected to the cradle frame and each pivotal device includes a first part and a second part. A plurality of first insertions extend from each of the first parts and the cradle frame is connected to the first insertions. Each first part includes a first insertion hole defined in a tubular portion extending therefrom and a U-shaped handle is connected to the two first insertion holes. An outer groove and an inner groove are defined in a side of each of the first parts. One of the first insertions includes a space and a spring and a pin are located in the space. A passage is defined between the space and the outer groove and a notch is defined between the outer and inner grooves. A sleeve is movably mounted to the first insertion with the space and a rivet extends through the sleeve and the pin so that the sleeve is moved with the pin.

The second part includes a second insertion extending therefrom and the second insertion is connected to the frame of the stroller. The second part includes an annular flange which is engaged with the outer groove in the first part and a plurality of positioning holes are defined through the annular flange so that the pin is inserted one of the positioning holes. A front wheel assembly is connected to a front end of the frame of the stroller.

The primary object of the present invention is to provide a baby stroller which includes a portable cradle removably mounted thereon and the portable cradle can be disengaged from the frame of the stroller simply by pushing a collar.

Another object of the present invention is to provide a baby stroller wherein a front wheel assembly on the stroller can be easily replaced by pulling a button member on the base of the front wheel assembly. 2

The present invention will become more obvious from the following description when taken in connection with the accompanying drawings which show, for purposes of illustration only, a preferred embodiment in accordance with the present invention.
Fig. 1 is an exploded view to show the baby stroller and the portable cradle of the present invention;
Fig. 2 is an exploded view to show the pivotal device and the support device of the present invention;
Fig. 3 is an exploded view to show the sleeve, the first part and the second part of the pivotal device of the present invention;
Fig. 4 is a cross sectional view to show the sleeve is connected to the first part of the present invention, wherein the pin is inserted into the positioning hole in the second part and the notch in the first part;
Fig. 5 is a cross sectional view to show that the pin is disengaged from the positioning hole in the second part and the notch in the first part;
Fig. 6 is a cross sectional view to show that the portable cradle is pivoted relative to the second part;
Fig. 7 is an exploded view to show the support device of the stroller of the present invention;
Fig. 8 is a partial cross sectional view to show the pivotal device is to be connected to the support device;
Fig. 9 is a partial cross sectional view to show the pivotal device is connected to the support device;
Fig. 10 is a partial cross sectional view to show that the collar is pushed to remove the plug of the roller from the side notches of the second insertion;
Fig. 11 is an exploded view to show the front wheel assembly;
Fig. 12 is an exploded view to show the top cover, the button member and the connection base of the front wheel assembly;
Fig. 13 is a cross sectional view to show the connection base is connected to the front wheel part by the button member, and
Fig. 14 is a cross sectional view to show that the button member is pulled so that the connection base and the front wheel part can be separated from each other.

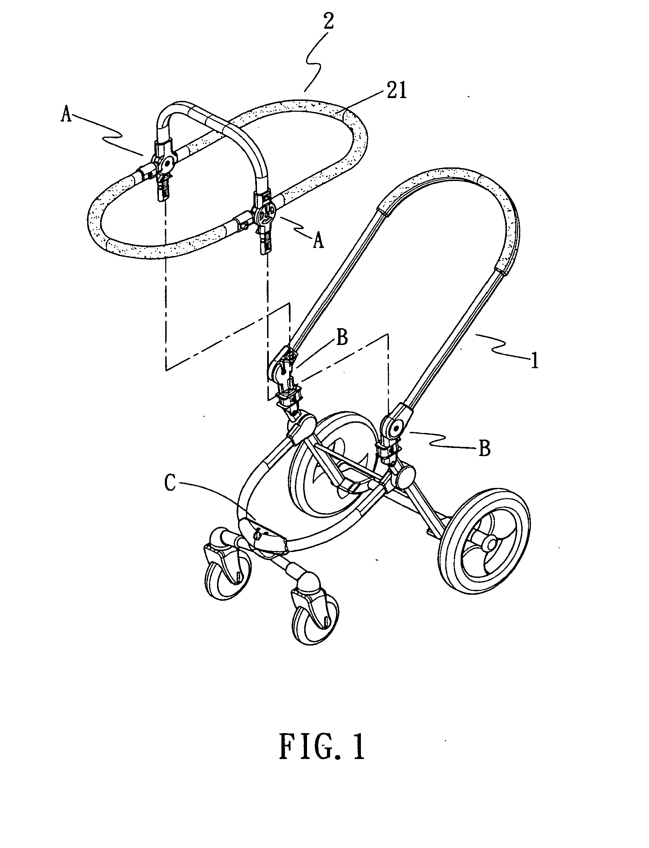

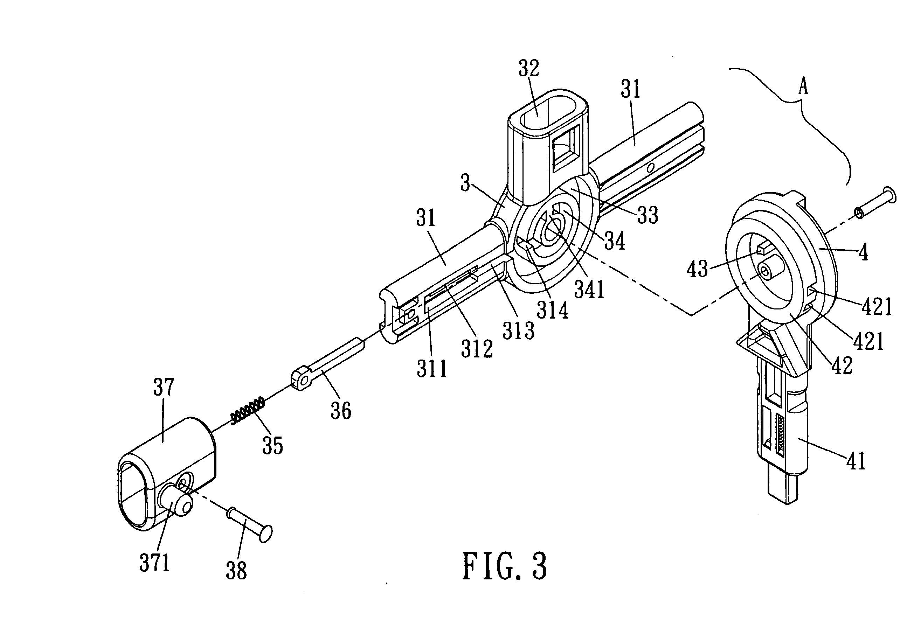

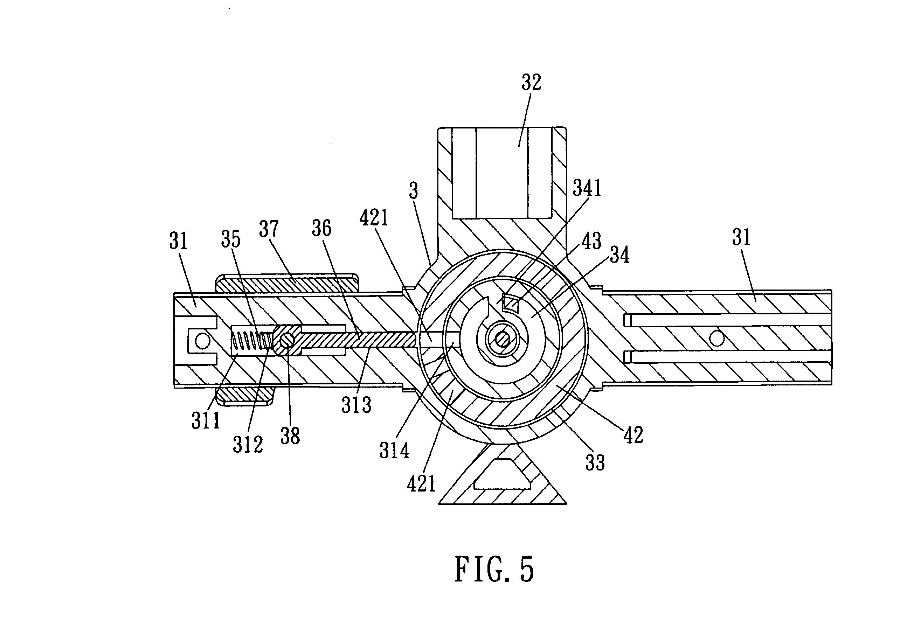

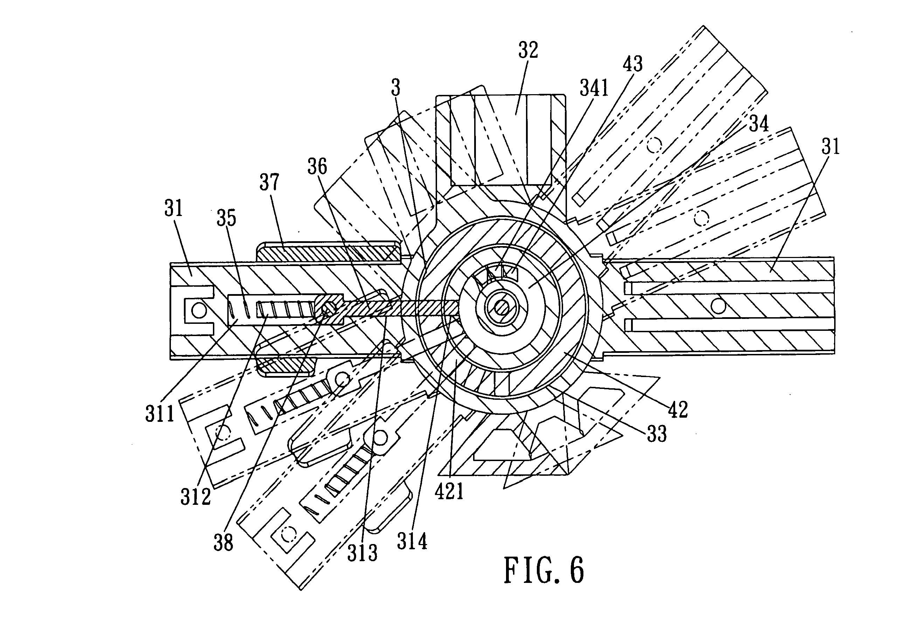

Referring to Figs. 1 to 6, the baby stroller of the present invention comprises a frame 1 having two rear wheels and a front wheel assembly "C" connected to a front end of the frame 1. Two support devices "B" are connected to the frame 1.

A portable cradle 2 is removably connected to the frame 1 and includes a cradle frame 21. Two pivotal devices "A" are connected to the cradle frame 21 and each include a first part 3 and a second part 4. Two first insertions 31 extend from each of the first parts 3 and the cradle frame 21 is connected to the first insertions 31. Each first part 3 includes a first insertion hole 32 defined in a tubular portion extending therefrom and a U-shaped handle (Fig. 1, not numbered) is connected to the two first insertion holes 32. An outer groove 33 and an inner groove 34 are defined in a side of each of the first parts 3 and a stop 341 is located in the inner groove 34 of the first part 3. One of the first insertions 31 has a space 311 defined therein and a through hole 312 is defined through the first insertion 31 and communicates with the space 311. A passage 313 is defined between the space 311 and the outer groove 33 and a notch 314 is defined between the outer and inner grooves 33, 34. A spring 35 and a pin 36 are located in the space 311, the pin 36 includes a ring at an end thereof. A sleeve 37 is movably mounted to the first insertion 31 which has the space 311 and a rivet 38 extends through the sleeve 37, the ring on the pin 36 and the through hole 312. A stub 371 extends from the sleeve 37 so that when pulling the stub 371, the sleeve 37 is moved with the pin 36 which can be pulled to be disengaged from the passage 313 and the notch 314.

The second part 4 includes a second insertion 41 extending therefrom and the second insertion 41 is to be connected to the support device "B" on the frame 1 of the stroller. An annular flange 42 extends from a side of the second part 4 and is engaged with the outer groove 33 in the first part 3. Two positioning holes 421 are defined through the annular flange 42 so that the pin 36 is inserted one of the positioning holes 421. A protrusion 43 extends from the second part 4 and is movably received in the inner groove 34 and will be stopped by the stop 341 when rotating the second part 4 relative to the first part 3.

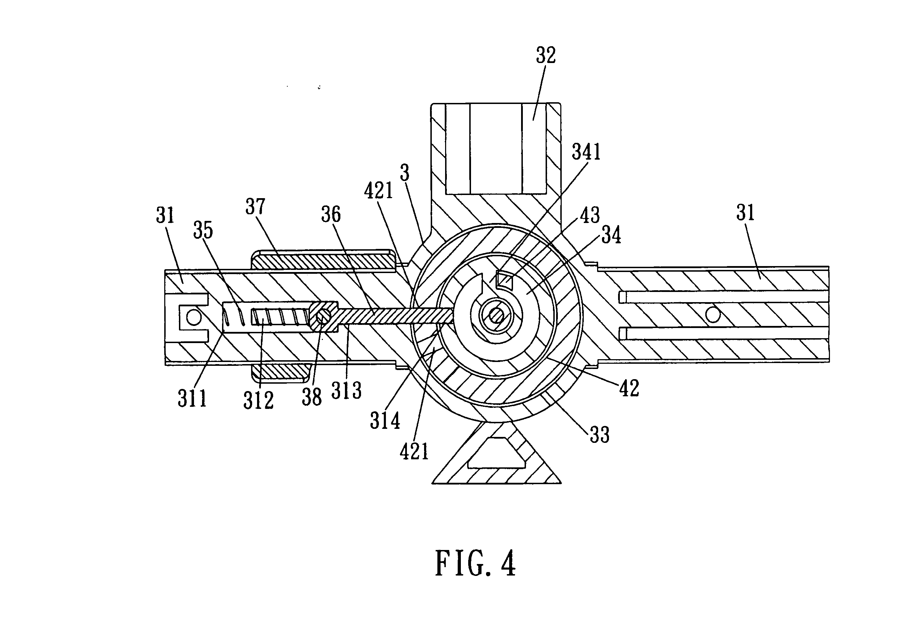

As shown in Figs. 4 to 6, when adjusting the inclination of the portable cradle 2, the user simply pulls the stub 371 on the sleeve 37 to remove the pin 36 from the notch 314 and the positioning hole 421, the first part 3 together with the portable cradle 2 can be pivoted relative to the second part 4. When desired angular position is reached, the sleeve 37 is released and the pin 36 extends through the other positioning holes 421 and the notch 314 to set the position. The protrusion 43 is stopped by the stop 341 to prevent the portable cradle 2 to be overly rotated.

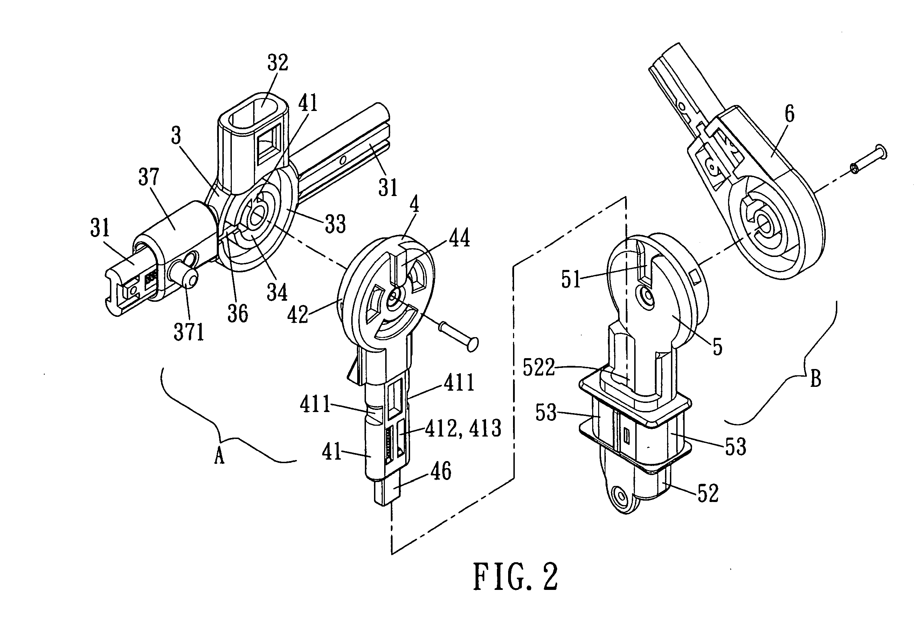

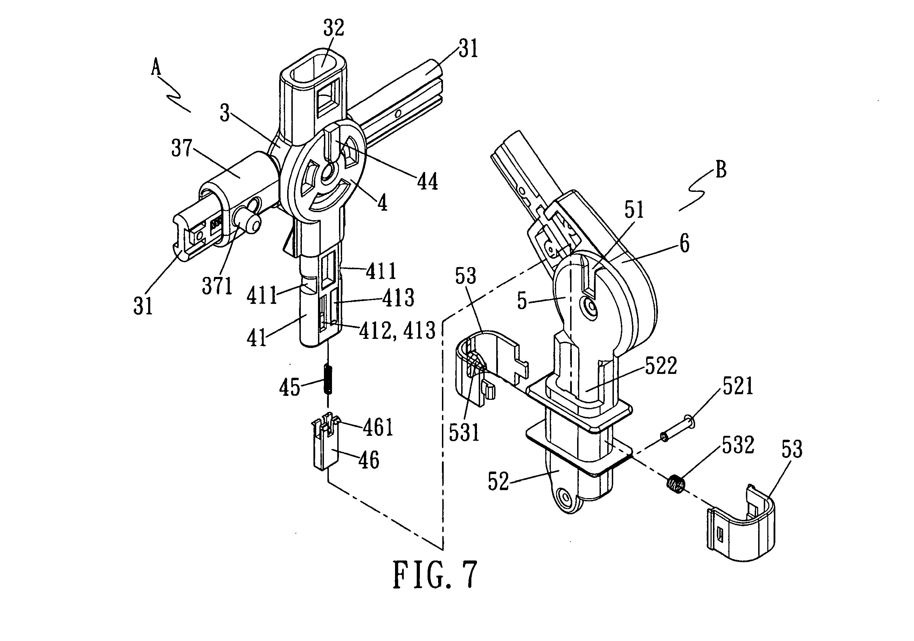

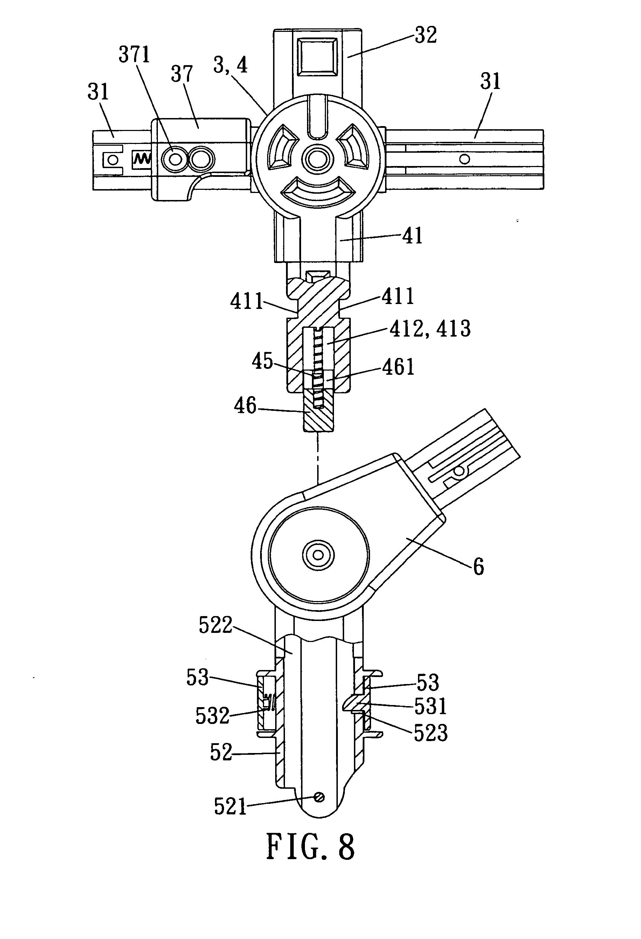

Referring to Figs. 7-10, each support device "B" includes a third part 5 and a fourth part 6 which is connected to the third part 5 by a rivet as shown in Fig. 2, each third part 5 includes a connection tube 52 extending therefrom which is connected to the frame 1 of the stroller by a rivet 521. An insertion hole 522 is defined in the connection tube 52 and a communication hole 523 is defined through a wall of the connection tube 52 and communicates with the insertion hole 522. A collar 53 is mounted to the connection tube 52 and includes a plug 531 extending from a first inner end thereof and a spring 532 is connected to the other inner end of the collar 53. The plug 531 extends through the communication hole 523 and is inserted into the insertion hole 522, the spring 532 is biased between an outer surface of the connection tube 52 and the collar 53.

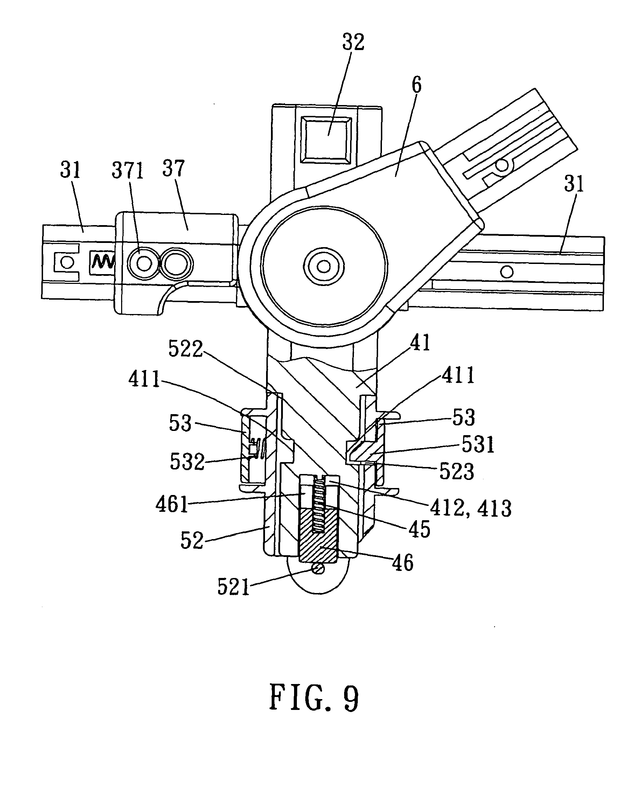

Two side notches 411 are defined in two sides of the second insertion 41 and a space 412 is defined in an underside of the second insertion 41, a plurality of elongate slots 413 are defined in an inside of the space 412. A spring 45 and a movable member 46 are received in the space 412, the movable member 46 includes a plurality of hooks 461 which are hooked to the elongate slots 413. The spring 45 biases the movable member 46 downward. The second insertion 41 of the second part 4 is inserted into the insertion hole 522 of the third part 3, the plug 531 is engaged with the side notches 411 of the second insertion 41 and the movable member 46 is stopped by the rivet 521 so that the spring 45 is compressed as shown in Fig. 9. A radial groove 51 is defined in the third part 5 and a block 44 extends from the second part 4, the block 44 is engaged with the radial groove 51.

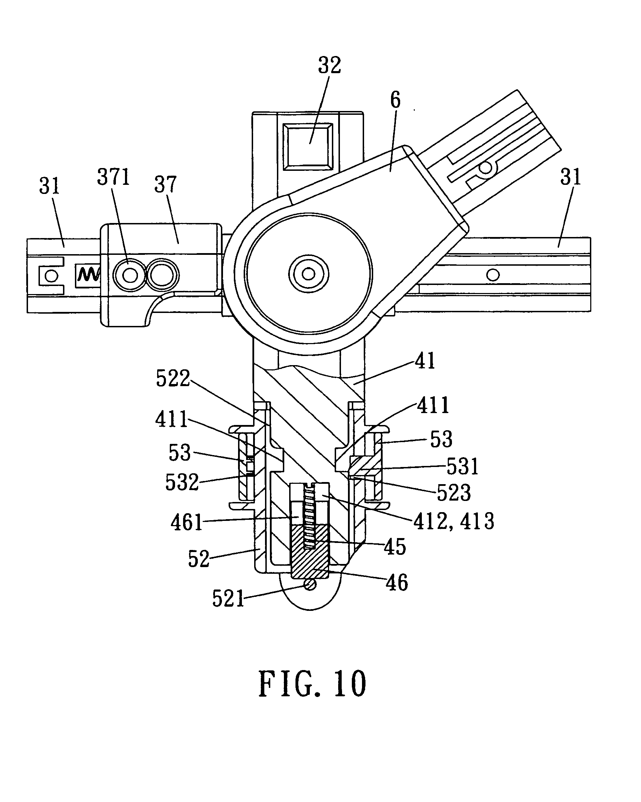

As shown in Fig. 10, when separating the portable cradle 2 from the frame 1 of the stroller, the collar 53 is pushed to compress the spring 532 so that the plug 531 is disengaged from the side notch 411 in the second insertion 41. The spring 45 then pushes the second insertion 41 to remove the second insertion 41 from the insertion hole 522 in the connection tube 52, the user can easily lift the portable cradle 2 from the frame 1 of the stroller.

The front wheel assembly "C" includes a base 7 fixed to the front end of the frame 1 of the stroller and a front wheel part 8 is connected to the base 7. The base 7 includes a connection base 71 which is fixed to the front end of the frame 1 and a top cover 72 which is mounted to the connection base 71. The connection base 71 includes a connection hole 711 and a stop plate 712 is located in front of the connection hole 711. A button member 73 is mounted to the stop plate 712 and includes two arms 731, a concavity 732 is defined in an underside of the button member 73 and a spring 733 is located in the concavity 732. The spring 733 is biased between the stop plate 712 and an inside of the concavity 732. The connection base 71 includes a plurality of recesses 713.

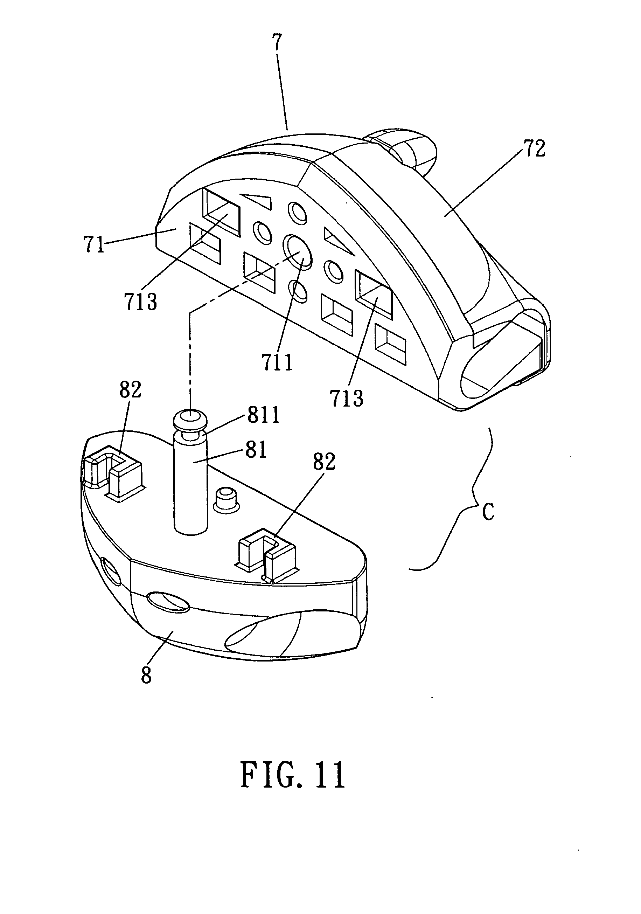

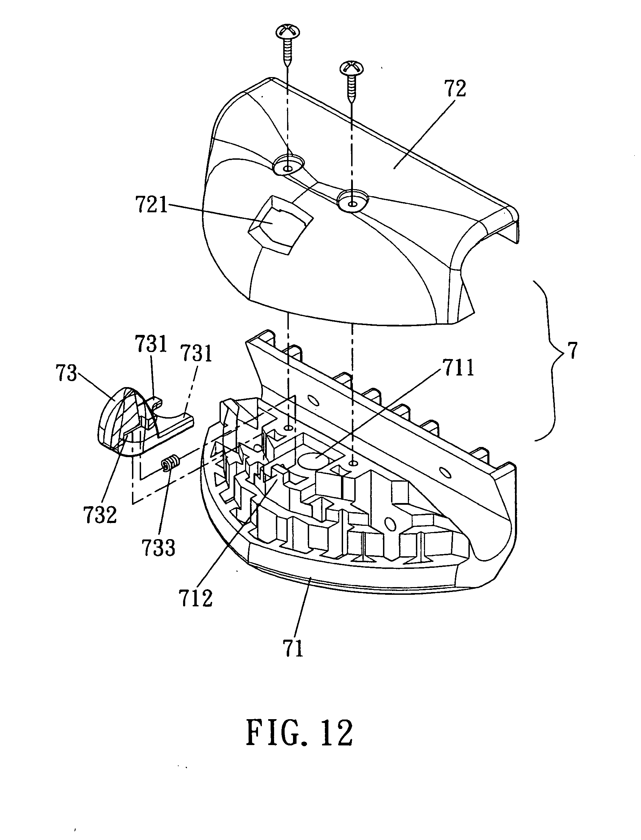

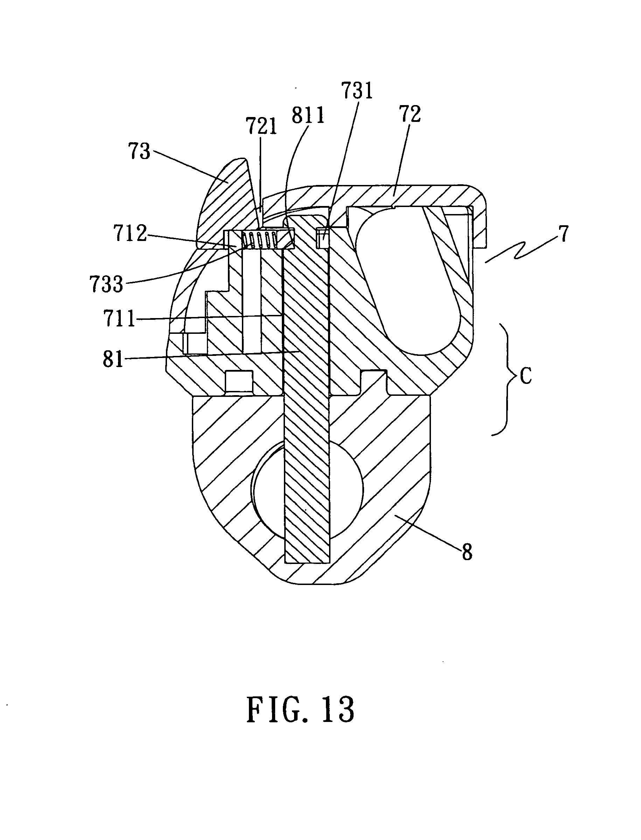

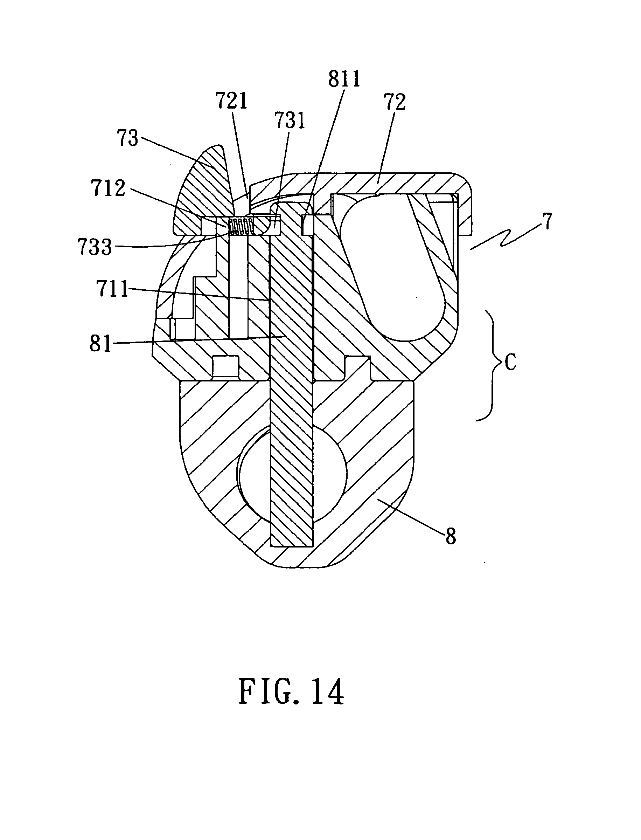

Referring to Figs. 11-14, the front wheel part 8 is mounted to the connection base 71 and includes an opening 721 through which the button member 73 extends. The front wheel part 8 is connected to the front wheels and a connection bar 81 and positioning protrusions 82 extend from a top of the front wheel part 8. The connection bar 81 is inserted into the connection hole 711 of the connection base 71 and the positioning protrusions 82 are inserted into the recesses 713 of the connection base 71. The connection bar 81 includes a shrink section 811, the arms 731 of the button member 73 are removably engaged with the shrink section 811.

When the button member 73 is pulled, the arms 731 are disengaged from the shrink section 811 and the front wheel part 8 can be removed from the connection base 71. Another front wheel part 8 can be easily connected to the connection base 71 to switch the front wheel part 8 from two front wheels to one front wheel.

While we have shown and described the embodiment in accordance with the present invention, it should be clear to those skilled in the art that further embodiments may be made without departing from the scope of the present invention.

## Claims

1. A baby stroller comprising:
a frame (1);
a portable cradle (2) removably connected to the frame (1) and including a cradle frame (21), two pivotal devices (A) connected to the cradle frame (21) and each including a first part (3) and a second part (4), a plurality of first insertions (31) extending from each of the first parts (3) and the cradle frame (21) connected to the first insertions (31), each first part (3) having a first insertion hole (32) defined in a tubular portion extending therefrom and a U-shaped handle being connected to the two first insertion holes (32), an outer groove (33) and an inner groove (34) defined in a side of each of the first parts (3), one of the first insertions (31) having a space (311) defined therein and a through hole (312) defined through the first insertion (31) and communicating with the space (311), a passage (313) defined between the space (311) and the outer groove (33) and a notch (314) defined between the outer and inner grooves (33, 34), a spring (35) and a pin (36) located in the space (311), a sleeve (37) movably mounted to the first insertion (31) with the space (311) and a rivet (38) extending through the sleeve (37), the pin (36) and the through hole (312) so that the sleeve (37) is moved with the pin (36), the second part (4) having a second insertion (41) extending therefrom and the second insertion (41) connected to the frame (1) of the stroller, the second part (4) having an annular flange (42) which is engaged with the outer groove (33) in the first part (3) and a plurality of positioning holes (421) defined through the annular flange (42) so that the pin (36) is inserted one of the positioning holes (421), and
a front wheel assembly (C) connected to a front end of the frame (1) of the stroller.

2. The stroller as claimed in claim 1, wherein a stop (341) is located in the inner groove (34) of the first part (3) and a protrusion (43) extends from the second part (4), the protrusion (43) is movably received in the inner groove (34) and stopped by the stop (341) when rotating the second part (4) relative to the first part (3).

3. The stroller as claimed in claim 1, wherein a stub (371) extends from the sleeve (37).

4. The stroller as claimed in claim 1, wherein the frame (1) of the stroller includes two support devices (B) to which the pivotal devices (A) are connected, each support device (B) includes a third part (5) and a fourth part (6), each third part (5) includes a connection tube (52) extending therefrom which is connected to the frame (1) of the stroller by a rivet (521), an insertion hole (522) is defined in the connection tube (52) and a communication hole (523) is defined through a wall of the connection tube (52) and communicates with the insertion hole (522), a collar (53) is mounted to the connection tube (52) and includes a plug (531) extending from a first inner end thereof and a spring (532) is connected to the other inner end of the collar (53), the plug (531) extends through the communication hole (523) and is inserted into the insertion hole (522), the spring (532) is biased between an outer surface of the connection tube (52) and the collar (53), two side notches (411) are defined in two sides of the second insertion (41), a space (412) is defined in an underside of the second insertion (41) and a plurality of elongate slots (413) are defined in an inside of the space (412), a spring (45) and a movable member (46) are received in the space (412), the movable member (46) includes a plurality of hooks (461) which are hooked to the elongate slots (413), the spring (45) biases the movable member (46) downward, the second insertion (41) of the second part (4) is inserted into the insertion hole (522) of the third part (3), the plug (531) is engaged with the side notches (411) of the second insertion (41).

5. The stroller as claimed in claim 4, wherein a radial groove (51) is defined in the third part (5) and a block (44) extends from the second part (4), the block (44) is engaged with the radial groove (51).

6. The stroller as claimed in claim 1, wherein the front wheel assembly (C) includes a base (7) fixed to the front end of the frame (1) of the stroller and a front wheel part (8) is connected to the base (7), the base (7) includes a connection base (71) which is fixed to the front end of the frame (1) and a top cover (72) which is mounted to the connection base (71), the connection base (71) includes a connection hole (711) and a stop plate (712) is located in front of the connection hole (711), a button member (73) is mounted to the stop plate (712) and includes two arms (731), a concavity (732) is defined in an underside of the button member (73) and a spring (733) is located in the concavity (732), the spring (733) is biased between the stop plate (712) and an inside of the concavity (732), the connection base (71) includes a plurality of recesses (713), the front wheel part (8) is mounted to the connection base (71) and includes an opening (721) through which the button member (73) extends, the front wheel part (8) is connected to front wheels and a connection bar (81) and positioning protrusions (82) extend from a top of the front wheel part (8), the connection bar (81) is inserted into the connection hole (711) of the connection base (71) and the positioning protrusions (82) are inserted into the recesses (713) of the connection base (71), the connection bar (81) includes a shrink section (811), the arms (731) of the button member (73) are removably engaged with the shrink section (811).

## Patentansprüche

1. Kinderwagen, umfassend:
ein Gestell (1);
eine tragbare Wiege (2), die mit dem Gestell (1) lösbar verbunden ist und ein Wiegengestell (21) aufweist, wobei zwei Drehvorrichtungen (A) mit dem Wiegengestell (21) verbunden sind und jede ein erstes Teil (3) und ein zweites Teil (4) aufweist, wobei sich mehrere erste Einschübe (31) von jedem der ersten Teile (3) erstrecken und das Wiegengestell (21) mit den ersten Einschüben (31) verbunden ist, wobei jedes erste Teil (3) ein erstes Einschubloch (32) aufweist, das in einem röhrenförmigen, sich davon erstreckenden Abschnitt definiert ist, und ein U-förmiger Griff mit den zwei ersten Einschublöchern (32) verbunden ist, wobei eine äußere Nut (33) und eine innere Nut (34) in einer Seite jedes der ersten Teile (3) definiert sind, wobei einer der ersten Einschübe (31) einen darin definierten Raum (311) aufweisen und ein Durchgangsloch (312) durch den ersten Einschub (31) definiert ist und mit dem Raum (311) in Verbindung steht, wobei ein Durchgang (313) zwischen dem Raum (311) und der äußeren Nut (33) und eine Einkerbung (314) definiert ist, die zwischen der äußeren und der inneren Nut (33, 34) definiert ist, wobei eine Feder (35) und ein Stift (36) in dem Raum (311) angeordnet sind, eine Hülse (37) an dem ersten Einschub (31) beweglich befestigt ist, wobei der Raum (311) und ein Niet (38) durch die Hülse (37), den Stift (36) und das Durchgangsloch (312) verlaufen, so dass die Hülse (37) mit dem Stift (36) bewegt wird, wobei das zweite Teil (4) einen zweiten Einschub (41) aufweist, der sich davon erstreckt, wobei der zweite Einschub (41) mit dem Gestell (1) des Wagens verbunden ist, wobei das zweite Teil (4) einen ringförmigen Flansch (42) aufweist, der mit der äußeren Nut (33) in dem ersten Teil (3) in Eingriff steht, und mehrere Positionierungslöcher (421) durch den ringförmigen Flansch (42) definiert sind, so dass der Stift (36) in eines der Positionierungslöcher (421) eingesetzt ist, und
eine Vorderradanordnung (C), die mit einem vorderen Ende des Gestells (1) des Wagens verbunden ist.

2. Wagen nach Anspruch 1, wobei ein Anschlag (341) in der inneren Nut (34) des ersten Teils (3) angeordnet ist und sich ein Vorsprung (43) von dem zweiten Teil (4) erstreckt, wobei der Vorsprung (43) in der inneren Nut (34) beweglich aufgenommen ist und von dem Anschlag (341) angehalten wird, wenn sich das zweite Teil (4) bezüglich des ersten Teils (3) dreht.

3. Wagen nach Anspruch 1, wobei sich ein Stumpf (371) von der Hülse (37) erstreckt.

4. Wagen nach Anspruch 1, wobei das Gestell (1) des Wagens zwei Stützvorrichtungen (B) aufweist, mit denen die Drehvorrichtungen (A) verbunden sind, wobei jede Stützvorrichtung (B) ein drittes Teil (5) und ein viertes Teil (6) aufweist, wobei jedes dritte Teil (5) ein sich davon erstreckendes Verbindungsrohr (52) aufweist, das mit dem Gestell (1) des Wagens durch einen Niet (521) verbunden ist, wobei ein Einschubloch (522) in dem Verbindungsrohr (52) definiert ist und ein Verbindungsloch (523) durch eine Wand des Verbindungsrohres (52) definiert ist und mit dem Einschubloch (522) in Verbindung steht, wobei ein Kragen (53) an dem Verbindungsrohr (52) befestigt ist und einen Verschluss (531) aufweist, der sich von einem ersten inneren Ende davon erstreckt, und eine Feder (532) mit dem anderen inneren Ende des Kragens (53) verbunden ist, wobei sich der Verschluss (531) durch das Verbindungsloch (523) erstreckt und in das Einschubloch (522) eingesetzt ist, wobei die Feder (532) zwischen einer äußeren Oberfläche des Verbindungsrohrs (52) und dem Kragen (53) vorgespannt ist, wobei zwei Seiteneinkerbungen (411) in zwei Seiten des zweiten Einschubs (41) definiert sind, ein Raum (412) in einer Unterseite des zweiten Einschubs (41) definiert ist und mehrere längliche Schlitze (413) in einem Inneren des Raums (412) definiert sind, wobei eine Feder (45) und ein bewegliches Glied (46) in dem Raum (412) aufgenommen sind, wobei das bewegliche Glied (46) mehrere Haken (461) aufweist, die an den länglichen Schlitzen (413) eingehakt sind, wobei die Feder (45) das bewegliche Glied (46) nach unten vorspannt, wobei der zweite Einschub (41) des zweiten Teils (4) in das Einschubloch (522) des dritten Teils (3) eingesetzt ist, wobei der Verschluss (531) mit den Seiteneinkerbungen (411) des zweiten Einschubs (41) in Eingriff steht.

5. Wagen nach Anspruch 4, wobei eine radiale Nut (51) in dem dritten Teil (5) definiert ist und sich ein Block (44) von dem zweiten Teil (4) erstreckt, wobei der Block (44) mit der radialen Nut (51) in Eingriff steht.

6. Wagen nach Anspruch 1, wobei die Vorderradanordnung (C) eine Basis (7) aufweist, die an dem vorderen Ende des Gestells (1) des Wagens befestigt ist, und ein Vorderradteil (8) mit der Basis (7) verbunden ist, wobei die Basis (7) eine Verbindungsbasis (71), die an dem vorderen Ende des Gestells (1) befestigt ist, und eine obere Abdeckung (72) aufweist, die an der Verbindungsbasis (71) befestigt ist, wobei die Verbindungsbasis (71) ein Verbindungsloch (711) aufweist und eine Anschlagplatte (712) vor dem Verbindungsloch (711) angeordnet ist, wobei ein Knopfelement (73) an der Anschlagplatte (712) befestigt ist und zwei Arme (731) aufweist, wobei eine Wölbung (732) in einer Unterseite des Knopfelements (73) definiert ist und eine Feder (733) in der Wölbung (732) angeordnet ist, wobei die Feder (733) zwischen der Anschlagplatte (712) und einem Inneren der Wölbung (732) vorgespannt ist, wobei die Verbindungsbasis (71) mehrere Aussparungen (713) aufweist, wobei das Vorderradteil (8) an der Verbindungsbasis (71) befestigt ist und eine Öffnung (721) aufweist, durch die sich das Knopfelement (73) erstreckt, wobei das Vorderradteil (8) mit Vorderrädern und einer Verbindungsstange (81) verbunden ist und wobei sich Positionierungsvorsprünge (82) von einer Oberseite des Vorderradteils (8) erstrecken, die Verbindungsstange (81) in dem Verbindungsloch (711) der Verbindungsbasis (71) eingesetzt ist und die Positionierungsvorsprünge (82) in den Aussparungen (713) der Verbindungsbasis (71) eingesetzt sind, wobei die Verbindungsstange (81) einen Schrumpfabschnitt (811) aufweist, wobei die Arme (731) des Knopfelements (73) mit dem Schrumpfabschnitt (811) lösbar in Eingriff stehen.

## Revendications

1. Poussette comprenant :
un châssis (1) ;
un berceau portable (2) connecté de façon amovible au châssis (1) et comprenant un châssis de berceau (21), deux dispositifs pivotants (A) connectés au châssis de berceau (21) et comprenant chacun une première partie (3) et une deuxième partie (4), une pluralité de premières pièces d'insertion (31) s'étendant depuis chacune des premières parties (3) et le châssis de berceau (21) étant connecté aux premières pièces d'insertion (31), chaque première partie (3) comportant un premier trou d'insertion (32) défini dans une partie tubulaire s'étendant depuis celle-ci et une poignée en U étant connectée aux deux premiers trous d'insertion (32), une rainure extérieure (33) et une rainure intérieure (34) définies dans un côté de chacune des premières parties (3), l'une des premières pièces d'insertion (31) comportant un espace (311) défini dedans et un trou traversant (312) défini à travers la première pièce d'insertion (31) et communiquant avec l'espace (311), un passage (313) défini entre l'espace (311) et la rainure extérieure (33) et une encoche (314) définie entre les rainures extérieure et intérieure (33, 34), un ressort (35) et un axe (36) placés dans l'espace (311), un manchon (37) monté de façon mobile sur la première pièce d'insertion (31) avec l'espace (311) et un rivet (38) s'étendant à travers le manchon (37), l'axe (36) et le trou traversant (312) de sorte que le manchon (37) est déplacé avec l'axe (36), la deuxième partie (4) comportant une deuxième pièce d'insertion (41) s'étendant depuis celle-ci et la deuxième pièce d'insertion (41) étant connectée au châssis (1) de la poussette, la deuxième partie (4) comportant un rebord annulaire (42) qui est en prise avec la rainure extérieure (33) de la première partie (3) et une pluralité de trous de positionnement (421) définis à travers le rebord annulaire (42) de sorte que l'axe (36) est inséré dans l'un des trous de positionnement (421), et
un ensemble de roue avant (C) connecté à une extrémité avant du châssis (1) de la poussette.

2. Poussette selon la revendication 1, dans laquelle une butée (341) est située dans la rainure intérieure (34) de la première partie (3) et une protubérance (43) s'étend depuis la deuxième partie (4), la protubérance (43) est reçue de façon mobile dans la rainure intérieure (34) et est arrêtée par la butée (341) lorsque l'on fait tourner la deuxième partie (4) par rapport à la première partie (3).

3. Poussette selon la revendication 1, dans laquelle un ergot (371) s'étend depuis le manchon (37).

4. Poussette selon la revendication 1, dans laquelle le châssis (1) de la poussette comprend deux dispositifs de support (B) auxquels les dispositifs pivotants (A) sont connectés, chaque dispositif de support (B) comprend une troisième partie (5) et une quatrième partie (6), chaque troisième partie (5) comprend un tube de connexion (52) s'étendant depuis celle-ci, qui est connecté au châssis (1) de la poussette par un rivet (521), un trou d'insertion (522) est défini dans le tube de connexion (52) et un trou de communication (523) est défini à travers une paroi du tube de connexion (52) et communique avec le trou d'insertion (522), un collier (53) est monté sur le tube de connexion (52) et comprend un bouchon (531) s'étendant depuis une première extrémité intérieure de celui-ci et un ressort (532) est connecté à l'autre extrémité intérieure du collier (53), le bouchon (531) s'étend à travers le trou de communication (523) et est inséré dans le trou d'insertion (522), le ressort (532) est sollicité entre une surface extérieure du tube de connexion (52) et le collier (53), deux encoches latérales (411) sont définies dans deux côtés de la deuxième pièce d'insertion (41), un espace (412) est défini dans une face inférieure de la deuxième pièce d'insertion (41) et un pluralité de fentes allongées (413) sont définies à l'intérieur de l'espace (412), un ressort (45) et un élément mobile (46) sont reçus dans l'espace mobile (412), l'élément mobile (46) comprend une pluralité de crochets (461) qui sont accrochés aux fentes allongées (413), le ressort (45) pousse l'élément mobile (46) vers le bas, la deuxième pièce d'insertion (41) de la deuxième partie (4) est insérée dans le trou d'insertion (522) de la troisième partie (3), le bouchon (531) est engagé dans les encoches latérales (411) de la deuxième pièce d'insertion (41).

5. Poussette selon la revendication 4, dans laquelle une rainure radiale (51) est définie dans la troisième partie (5) et un bloc (44) s'étend depuis la deuxième partie (4), le bloc (44) étant en prise avec la rainure radiale (51).

6. Poussette selon la revendication 1, dans laquelle l'ensemble de roue avant (C) comprend une base (7) fixée à l'extrémité avant du châssis (1) de la poussette et une partie de roue avant (8) est connectée à la base (7), la base (7) comprend une base de connexion (71) qui est fixée à l'extrémité avant du châssis (1) et un couvercle supérieur (72) qui est monté sur la base de connexion (71), la base de connexion (71) comprend un trou de connexion (711) et une plaque d'arrêt (712) est située devant le trou de connexion (711), un élément formant bouton (73) est monté sur la plaque d'arrêt (712) et comprend deux bras (731), une concavité (732) est définie dans une face inférieure de l'élément formant bouton (73) et un ressort (733) est placé dans la concavité (732), le ressort (733) est sollicité entre la plaque d'arrêt (712) et l'intérieur de la concavité (732), la base de connexion (71) comprend une pluralité d'évidements (713), la partie de roue avant (8) est montée sur la base de connexion (71) et comprend une ouverture (721) par laquelle s'étend l'élément formant bouton (73), la partie de roue avant (8) est connectée à des roues avant et une barre de connexion (81) et des protubérances de positionnement (82) s'étendent depuis un sommet de la partie de roue avant (8), la barre de connexion (81) est insérée dans le trou de connexion (711) de la base de connexion (71) et les protubérances de positionnement (82) sont insérées dans les évidements (713) de la base de connexion (71), la barre de connexion (81) comprend une section rétrécie (811), les bras (731) de l'élément formant bouton (73) sont mis en prise de façon amovible avec la section rétrécie (811).
